# EUROPÄISCHE PATENTSCHRIFT

(11) **EP 3 741 031 B1**
(45) Veröffentlichungstag und Bekanntmachung des Hinweises auf die Patenterteilung: **18.10.2023**
(21) Anmeldenummer: 19704273.2
(22) Anmeldetag: 05.02.2019
(51) Int. Cl.: H02K 15/00, H02K 17/16, H02K 7/04

(54) **VERFAHREN ZUR HERSTELLUNG EINES KÄFIGLÄUFERS**
METHOD FOR PRODUCING A SQUIRREL-CAGE ROTOR
PROCÉDÉ DE FABRICATION D'UN ROTOR À CAGE D'ÉCUREUIL

(30) Priorität: 12.03.2018 EP 18161163
(43) Veröffentlichungstag der Anmeldung: 25.11.2020
(73) Patentinhaber: Siemens Mobility GmbH, 81739 München (DE)
(72) Erfinder: KÖRNER, Olaf, 90469 Nürnberg (DE); OUDE KOTTE, Freerk Jacobus, 90547 Stein (DE)
(74) Vertreter: Siemens Patent Attorneys
(86) Internationale Anmeldenummer: PCT/EP2019/052705
(87) Internationale Veröffentlichungsnummer: WO 2019/174816

(56) Entgegenhaltungen:
- EP-A1- 2 592 729
- EP-A2- 1 643 622
- EP-A2- 2 782 222
- US-A1- 2012 248 901
- US-A1- 2015 188 397

## Beschreibung

Die Erfindung betrifft ein Verfahren zur Herstellung eines Käfigläufers einer Asynchronmaschine, einen Käfigläufer als auch eine Asynchronmaschine mit einem derartigen Käfigläufer. Ein Käfigläufer einer Asynchronmaschine weist einen Kurzschlusskäfig auf, der in einen magnetisch leitfähigen Grundkörper eingebettet ist. Dabei werden die im magnetisch leitfähigen Grundkörper angeordneten Leiter an den axialen Stirnseiten des magnetisch leitfähigen Grundkörpers, der auch als Blechpaket ausgeführt sein kann durch einen Kurzschlussring elektrisch verbunden, der direkt an den Stirnseiten oder davon beabstandet angeordnet sein kann.

Aus der DE 38 34 466 C1 ist ein Kurzschlussläufer einer elektrischen Maschine bekannt, bei dem die an den beiden Stirnseiten eines Läuferblechpakets aus den Nuten ragenden Enden der Leiter in eine stirnseitige durch einen Innen- und Außenabstand begrenzte Ringvertiefung eines Kurzschlussrings ragen und durch in die Ringvertiefung eingebrachtes, in der Ringvertiefung durch zeitige Erwärmung des vollständigen Kurzschlussringes zum Schmelzen gebrachtes und danach erstarrtes Hartlot elektrisch und mechanisch mit dem Kurzschlussring verbunden werden.

EP 2 782 222 A2 offenbart einen Käfigrotor mit elektrischen Leitern in Nuten, die aus den Stirnseiten der Grundkörper herausragen, mit mehreren Ringen, die die Leiter elektrisch und mechanisch verbinden.

US 2015/188397 A1 offenbart einen Käfigläufer mit elektrischen Leitern in Nuten, die aus den Stirnseiten der Grundkörper herausragen, und Anschlagschultern zur Positionierung der Kurzschlussringe aufweisen.EP 2 592 729 A1 offenbart einen Käfigläufer mit elektrischen Leitern in Nuten, die aus den Stirnseiten der Grundkörper herausragen und durch das AM-Verfahren sowohl eine elektrische Kontaktierung als auch eine Auswuchtung durch Materialanhäufung am Kurzschlussring erfolgt. EP 1 643 622 A2 offenbart einen Käfigrotor mit elektrischen Leitern in Nuten, die aus den Stirnseiten der Grundkörper herausragen, ein Ring mit zusätzlichen Aussparungen die die Leiter elektrisch und mechanisch verbindet.

US 2012/248901 A1 offenbart einen Käfigrotor mit elektrischen Leitern in Nuten, die aus den Stirnseiten der Grundkörper herausragen, ein Ring, der mit den Leitern durch ein Cold-Spray-Verfahren elektrisch und mechanisch verbunden ist.

Nachteilig dabei ist, dass bei einer derartigen Verbindung mittels Hartlötverfahren jedoch Lötspalte eingehalten werden müssen, die sich prozesssicher nur aufwändig herstellen lassen.

Ausgehend davon liegt der Erfindung die Aufgabe zugrunde, einen Käfigläufer einer Asynchronmaschine zu schaffen, der sich vergleichsweise einfach und prozesssicher herstellen lässt. Dabei soll u.a. die elektrische Kontaktierung zwischen Leitern und einem Kurzschlussring verbessert werden. Des Weiteren soll eine Asynchronmaschine bereitgestellt werden, die vergleichsweise geringe Verluste aufweist.

Die Lösung der gestellten Aufgabe gelingt durch ein Verfahren zur Herstellung eines Käfigläufers einer Asynchronmaschine nach Anspruch 1 durch folgende Schritte:
- Bereitstellen eines zumindest abschnittsweise magnetisch leitfähigen Grundkörpers mit im Wesentlichen axial verlaufenden Nuten,
- Einsetzen von elektrischen Leitern in die Nuten derart, dass diese Leiter aus den axialen Stirnseiten des magnetisch leitfähigen Grundkörpers ragen,
- Positionieren von elektrisch leitfähigen Kurzschlussringen, die mehrere Ausnehmungen zur Aufnahme der jeweiligen Leiter aufweisen,
- elektrisches Kontaktieren der Leiter mit den Ringen durch ein oder mehrere AM-Verfahren.

Die Lösung der gestellten Aufgabe gelingt ebenfalls durch einen Käfigläufer, der durch die oben aufgeführten Schritte hergestellt wurde.

Die Lösung der gestellten Aufgabe gelingt ebenso durch eine Asynchronmaschine mit einem erfindungsgemäßen Käfigläufer.

Durch die erfindungsgemäße Herstellung eines Käfigläufers einer Asynchronmaschine wird nunmehr das bisherige elektrische Kontaktieren von Leitern und Kurzschlussringen mittels eines Lötvorganges bei verbesserter Kontaktierung stark vereinfacht.

Durch das erfindungsgemäß Ausgestalten des Kurzschlussringes mit im Wesentlichen an die Stabgeometrie angepassten Durchführungen bietet sozusagen die Ausnehmung in Richtung Stirnseite des magnetisch leitfähigen Grundkörpers eine Art Abdichtung durch die verbleibenden geringen Spaltmaße. Damit wird bei einem insbesondere axial durchgeführten Additiv Manufacturing-Verfahren, beispielsweise einem Cold-Spray-Verfahren eine Abdichtung in Richtung des magnetisch leitfähigen Grundkörper gewährleistet.

Die Ausnehmungen im Kurzschlussring können beispielsweise durch Fräsen, Stanzen, Schmieden oder Lasern oder auch bereits durch Gießen eines vorgefertigten Kurzschlussringes bereitgestellt werden.

Die Aussparungen im Kurzschlussring werden durch die Kontaktierung mit einem leitfähigen Material, vorzugsweise Kupfer oder auch Aluminium aufgefüllt. Es stellt sich somit eine elektrische Kontaktierung zwischen dem Abschnitt des Leiters im Bereich des Kurzschlussrings und dem Kurzschlussring ein. Die Aussparungen im Kurzschlussring erweitern sich dabei axial nach außen, also von dem magnetisch leitfähigen Grundkörper weg. Dabei sind diese Aussparungen nunmehr beispielsweise konusförmig oder trichterförmig ausgeführt.

Die Leiter, insbesondere einzelne Leiterstäbe oder Leiterstabbündel pro Nut können dabei entweder letztendlich axial bündig mit der äußeren Stirnfläche des Kurzschlussringes abschließen oder axial noch weiter geführt sein, nämlich axial über die Stirnseite des Kurzschlussrings hinaus um somit auch eine gewisse Lüfterwirkung im Betrieb der Asynchronmaschine erzielen zu können.

Bei einer subtraktiven, z.B. einer spanenden, Bearbeitung des Kurzschlussrings, insbesondere zur Ausbildung der Vertiefung, muss z.B. ein Fräser nicht an jeder Aussparung angrenzend eine Vertiefung ausbilden, sondern kann an zwei oder mehr Aussparungen angrenzend eine Vertiefung ausbilden. Dadurch geht die Fertigung schneller vonstatten.

Vorteilhaft werden der Kurzschlussring und die Leiterstäbe zusammengefügt und während und/oder nach dem Zusammenfügen wird ein Dichtungsmittel zur Abdichtung von Spalten zwischen Kurzschlussring und Käfigstab eingesetzt.

In einer vorteilhaften Ausführungsform der Erfindung ist das additive Verfahren ein additives Lichtbogen-Schweiß-Verfahren oder ein Metall-Pulver-Auftrags-Verfahren (MPA) oder ein 3D-Metal-Print-Verfahren (3DMP).

Jedoch eignen sich auch andere an sich bekannte additive Fertigungsverfahren, wie das Cold-Spray-Verfahren.

Das additive Verfahren bietet den Vorteil, dass eine stoffschlüssige Verbindung bei gleichzeitigem Materialauftrag erreicht wird. Diese stoffschlüssige Verbindung ist hinsichtlich der erforderlichen elektrischen und mechanischen Eigenschaften, wie elektrische Leitfähigkeit und Fliehkraftbeständigkeit besonders geeignet.

Das additive Verfahren bietet zudem den Vorteil, dass dieses dazu ausgebildet ist, voll automatisiert abzulaufen. Dies ermöglicht ein prozesssicheres Verfahren. Zudem bietet das additive Verfahren den Vorteil, dass insbesondere Kleinserien und/oder Prototypen flexibel und schnell gefertigt werden können, auch unter Berücksichtigung geänderter Geometrien.

Vorteilhaft wird das additive Verfahren in den Fertigungsprozess zur Herstellung des Rotors eines Asynchronmaschine und damit der elektrischen Maschine selbst integriert.

Als additives Lichtbogen-Schweiß-Verfahren wird Schweißen bezeichnet, wenn durch einen Schweißzusatzwerkstoff, z.B. Draht oder Pulver, unter Anwendung von Wärme ein Volumenaufbau stattfindet. Hierbei wird Schicht für Schicht der Schweißzusatzwerkstoff aufgetragen, durch Schmelzen stoffschlüssig mit einem zu verbindenden Bauteil oder der darunterliegenden Schicht verbunden und somit der Volumenaufbau bewerkstelligt.

Verfahren, die auf einem ähnlichen Prinzip beruhen und sich daher ebenso eignen, sind z.B. die Folgenden: Laser-Auftrag-Schweiß-Verfahren oder Plasma-Pulver-Auftrag-Schweiß-Verfahren, DMD-Verfahren (Direct Metal Deposition), LMD-Verfahren (Laser Metal Deposition) und 3DMP-Verfahren (3D Metal Print).

Beim MPA-Verfahren wird ein Hauptgas, vorzugsweise Stickstoff, Luft, Helium oder Wasserdampf, in einer Lavaldüse beschleunigt. Kurz vor, in oder nach dem Lavalpunkt werden Pulverpartikel injiziert. Die Pulverpartikel werden auf Überschallgeschwindigkeit beschleunigt und treffen so auf einem Substrat oder einem Bauteil, wie z.B. dem Leiterstab und/oder dem Kurzschlussring auf. Die hohe kinetische Energie des Pulverpartikels wird beim Aufprall in Wärme umgewandelt, wodurch der Partikel anhaftet. Die Haftung kann ergänzend oder alternativ auch durch Ineinanderhaken der Partikel untereinander und der Partikel und dem Träger erfolgen.

Da die Pulverpartikel nicht aufgeschmolzen werden, findet nur ein geringer Energieeintrag in das Bauteil statt. Beim MPA-Verfahren können mehrere Düsen gleichzeitig verschiedene Pulverpartikel auftragen. Ebenso kann mit einer Düse und wechselbaren Pulverbehältern gearbeitet werden. Somit kann auch ein Bauteil geschaffen werden, das wenigstens zwei unterschiedliche Materialien aufweist.

Das 3DMP-Verfahren basiert auf dem Lichtbogen-Schweiß-Verfahren und verwendet als Ausgangsmaterial Draht. Schweißraupe für Schweißraupe wird hiermit ein Werkstück gedruckt. Das 3DMP-Verfahren bietet den Vorteil, dass viele Materialien bereits als Draht erhältlich sind, nicht jedoch als Pulver. Zudem ist Draht als Werkstoff günstiger als Werkstoff in Pulverform. Das 3DMP-Verfahren bietet ferner eine hohe Aufbaurate.

In einer weiteren vorteilhaften Ausführungsform der Erfindung ist das Material Aluminium oder Kupfer oder deren Legierungen. Die beiden Materialien Aluminium und Kupfer stellen in Bezug auf Preis und Leitfähigkeit die bestmögliche Option zur Bildung einer elektrisch leitfähigen Verbindung dar.

Die elektrisch leitfähige Verbindung zwischen Kurzschlussring und Käfigstäben wird vorteilhaft mit einem Material realisiert, welches bereits in den Käfigstäben enthalten ist bzw. aus welchem die Käfigstäbe bestehen, vorzugsweise Kupfer. Dies hat den Vorteil, dass nur geringe Adhäsionskräfte vorliegen und dadurch die Verbindung beständig gegenüber mechanischen Belastungen ausgebildet werden kann.

In einer weiteren Ausführung kann jeder der Kurzschlussringe auch aus mehreren axial direkt hintereinander angeordneten Scheiben oder Blechen hergestellt werden, die auch in axialer Richtung kontaktiert sein können.

Der dem Blechpaket axial am nächsten liegende Ring weist vorteilhafterweise die engste Durchführungen für die Leiterstäbe auf, um damit eine ev. erforderliche Abdichtwirkung zu erzielen. Diese Durchführung sollte den Leiterstab oder die Leiterstäbe möglichst eng umschließen, um für die anschließende Fertigungsschritte, z.B. ein im Wesentlichen axiales Cold-Spray-Verfahren eine zumindest teilweise Abdichtung in Richtung Blechpaket zu erhalten. Die sich in axialer Richtung anschließenden weiteren Ringe weisen dann Aussparungen auf, die sich als erweiternde Taschen aufweisen, um das additiv eingebrachte leitfähige Material z.B. Kupfer aufzunehmen.

Die weiteren Ringscheiben können zusätzliche Öffnungen, Aussparungen aufweisen, um mit dem additiv aufgebrachten Leitermaterial beispielsweise Kupfer, eine Verbindung des Leiters zu den Ringscheiben und damit letztlich zum Kurzschlussring herzustellen, ähnlich einer Lochschweißung.

In einer weiteren Ausgestaltung sind die Stabenden der Leiter beispielsweise durch Überdrehen nach dem Positionieren im Blechpaket des Rotors mit einem oder mehreren nahezu tangential verlaufenden Schlitzen versehen, um die wirksame Oberfläche zur Stab-Kurzschlussring-Verbindung zu erhöhen.

In einer vorteilhaften Ausgestaltung wird während des Cold-Spray-Verfahrens der Rotor zusätzlich gewuchtet umso zusätzliche Materialanhäufungen im oder am Kurzschlussring vorzusehen, um einen ausgewuchteten Rotor zu erhalten.

Dies hat den Vorteil, dass sich die Fertigung des Kurzschlussrings mittels additiver oder subtraktiver Fertigungsverfahren u.a. zügiger gestaltet.

Die Erfindung sowie weitere vorteilhafte Ausgestaltungen der Erfindung werden anhand prinzipiell dargestellter Ausführungsbeispiele näher erläutert. Darin zeigen:
- FIG 1: einen Längsschnitt eines Rotors,
- FIG 2: eine Seitenansicht eines Kurzschlussrings,
- FIG 3: eine Detaildarstellung dieses Kurzschlussrings,
- FIG 4: ein prinzipielles AM-Verfahren,
- FIG 5: eine Detaildarstellung eines Kurzschlussrings,
- FIG 6: eine Ringscheibe dieses Kurzschlussrings,
- FIG 7: eine weitere Detaildarstellung des Kurzschlussrings,
- FIG 8: eine weitere Scheibe,
- FIG 9: eine Detaildarstellung einer Scheibe,
- FIG 10 und 11: weitere Detaildarstellungen einer Scheibe.

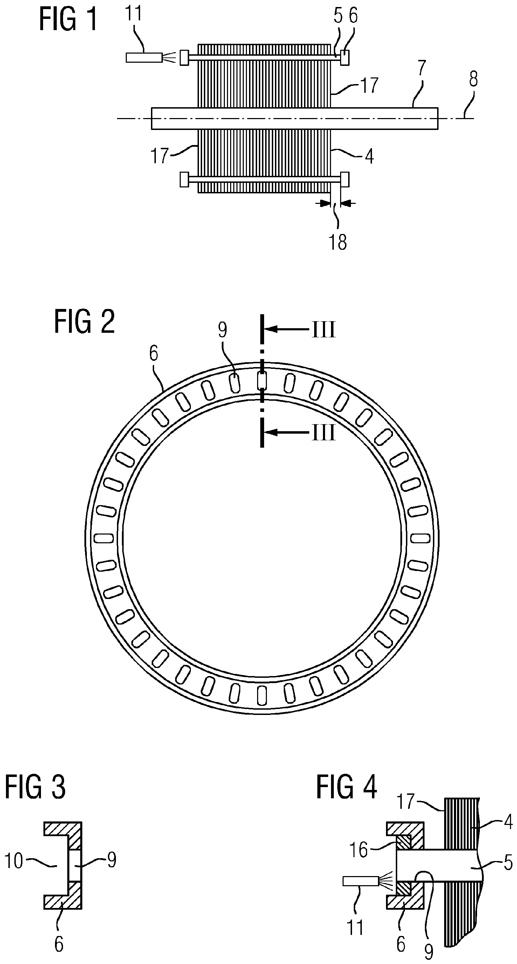

FIG 1 zeigt in einem Längsschnitt einen Rotor, insbesondere einen Käfigläufer 3 einer Asynchronmaschine mit seinem magnetischen leitfähigen Grundkörper, der als Blechpaket 4 ausgeführt ist. In dem Blechpaket sind in im Wesentlichen axial verlaufende Nuten Leiter 5 angeordnet sind, die aus den Stirnseiten 17 des Blechpakets 4 ragen und dort durch Kurzschlussringe 6 elektrisch leitend verbunden sind. Die Kurzschlussringe 6 weisen einen axialen Abstand 18 von der Stirnseite 17 des Blechpaket 4 auf, was die Kühlung des Käfigläufers 3, insbesondere im Bereich der Kurzschlussringe 6 verbessert. Das Blechpaket 4 ist drehfest mit einer Welle 7 verbunden, die um eine Achse 8 drehbar gelagert ist.

FIG 2 zeigt einen Kurzschlussring 6, der so für die weitere Herstellung gegossen oder gefräst vorliegt, und der in Umfangsrichtung betrachtet angeordnete Ausnehmungen 9 aufweist, die mit der Anzahl und der Form der Leiter 5 korrespondieren. Im Herstellverfahren wird nunmehr der Kurzschlussring 6 auf die axial aus dem Blechpaket 4 ragenden Leiter gesetzt, positioniert und durch ein AM-Verfahren vorzugsweise ein Cold-Spray-Verfahren kontaktiert. Dabei wird das erforderliche Material in Pulverform axial in den Bereich zwischen Leiterstab 5 in eine Aussparung 10 des Kurzschlussringes 6 gegeben. Damit erfolgt eine Kontaktierung zwischen den Leiterstäben 5 und dem Kurzschlussring 6.

FIG 3 zeigt eine Detaildarstellung einer Ausnehmung 9, wobei durch die Ausnehmung 9 im Kurzschlussring 6, die sich in eine Aussparung 10 erweitert, das Cold-Spray-Verfahren eine Kontaktierung ermöglicht wird.

FIG 4 zeigt einen in dieser Ausnehmung 9 platzierten Leiter 5, wobei in die Aussparung 10 durch eine Cold-Spray-Düse 11 Kupfer axial gesprayt wird, so dass durch den Materialeintrag 16 eine elektrische Kontaktierung zwischen dem Leiter 5 und dem Kurzschlussring 9 erfolgt.

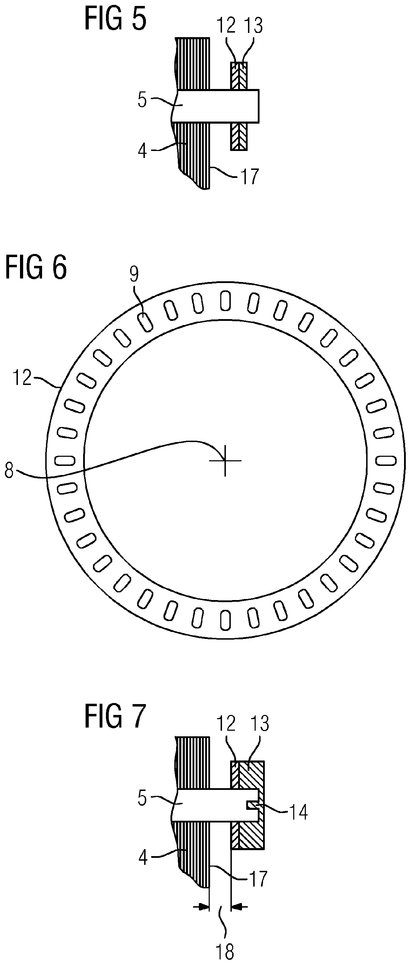

FIG 5 zeigt in einer Detaildarstellung ein Blechpaket 4 mit einem Kurzschlussring 6, der aus zwei axial hintereinander angeordneten Ringscheiben 12 und 13 aufgebaut ist.

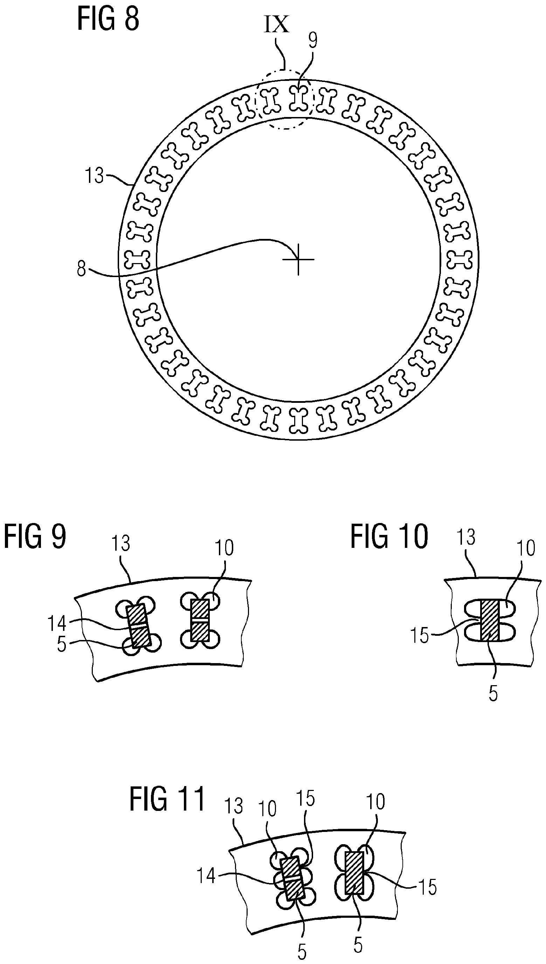

Ring 12, wie in FIG 6 dargestellt weist dabei wieder Ausnehmungen 9 auf, die in Form und Größe dem Querschnitt des Leiters 5 angepasst sind. Ring 13, wie in FIG 8, weist die Aussparungen 10 auf, die in Größe und Form derart ausgestaltet sind, dass sie eine vergleichsweise gute Kontaktierung zwischen dem Leiterstab 5 und dem Kurschlussring 6 also den Ringen 12 und 13 gewährleistet.

FIG 7 zeigt eine Möglichkeit, wie durch tangentiale Formgebung eines Leiterstabendes die Fläche zwischen Kurzschlussring 6 und Leiter 5 vergrößert wird. Dies führt zu einer verbesserten Kontaktierung.

FIG 9 zeigt eine knochenförmige, hantelförmige oder geschwungene Aussparungen 10 des Kurzschlussringes 6, insbesondere des Ringes 13, die einen Leiterstab 5 mittels ihrer Formgebung durch möglichst wenig flächige Kontakte mit dem Leiterstab 5 im Kurzschlussring 6, insbesondere während des Cold-Spray-Verfahrens fixieren.

FIG 10 zeigt eine prinzipiell taillierte Aussparung 10 zur Fixierung des Leiterstabes 5, wobei ebenfalls durch die Formgebung der Aussparung 10 möglichst wenig flächige Kontakte vorhanden sind, die den Leiterstab im Kurzschlussring 6 fixieren.

FIG 11 zeigt weitere Möglichkeiten der Fixierung der Leiterstäbe 5 mit möglichst wenig Anlagefläche, um die Kontaktierung zwischen dem Leiterstab 5 und dem Kurzschlussring 6, insbesondere dem Ring 13 weiter zu verbessern.

Die Ausgestaltungen der Aussparungen 10 gemäß FIG 9, FIG 10 und FIG 11 sind vor allem für die Ringe 13 geeignet. Ring 12 dient in erster Linie auch der Abdichtung zwischen Leiter 5 und der Ausnehmung 9 in Ring 12 zur Stirnseite 17 des Blechpaketes 4.

## Patentansprüche

1. Verfahren zur Herstellung eines Käfigläufers (3) einer Asynchronmaschine (1) durch folgende Schritte:
- Bereitstellen eines zumindest abschnittsweise magnetisch leitfähigen Grundkörpers (4) mit im Wesentlichen axial verlaufenden Nuten,
- Einsetzen von elektrischen Leitern (5) in die Nuten derart, dass diese Leiter (5) aus den axialen Stirnseiten des magnetisch leitfähigen Grundkörpers ragen,
- Positionieren von elektrisch leitfähigen Kurzschlussringen (6), die mehrere Ausnehmungen (9) zur Aufnahme der jeweiligen Leiter (5) aufweisen,
- elektrisches Kontaktieren der Leiter (5) mit den Kurzschlussringen (6) durch ein additives Fertigungsverfahren,
- wobei auf jeder Stirnseite (17) des magnetisch leitfähigen Grundkörpers (4) ein oder mehrere Kurzschlussringe (6) vorgesehen sind,
- wobei jeder der Kurzschlussringe (6) aus mehreren axial direkt hintereinander angeordneten Ringscheiben (12, 13) hergestellt ist,
**dadurch gekennzeichnet, dass**
- die dem magnetischen Grundkörper axial am nächsten liegende Ringscheibe (12) eine engste Durchführung für die Leiter (5) aufweist,
- sich die in axialer Richtung anschließende zumindest eine Ringscheibe (13) zusätzliche Aussparungen (10) aufweist, und
- das additive Fertigungsverfahren ein Cold-Spray-Verfahren ist, bei welchem leitfähiges Material im Wesentlichen axial in die Aussparungen eingebracht wird, wodurch die Leiter (5) mit dem Kurzschlussring (6) kontaktiert werden.

2. Verfahren zur Herstellung eines Käfigläufers (3) nach Anspruch 1, **dadurch gekennzeichnet, dass** die axial aus den Stirnseiten (17) des magnetisch leitfähigen Grundkörpers (4) ragenden Leiter (5) eine Anschlagschulter zur Positionierung der Kurzschlussringe (6) aufweisen, so dass sich ein Käfigläufer (3) mit von dem magnetisch leitfähigen Grundkörper (4) beabstandeten Kurschlussringen (6) ergibt.

3. Verfahren zur Herstellung eines Käfigläufers (3) nach einem der vorhergehenden Ansprüche, **dadurch gekennzeichnet, dass** durch das AM-Verfahren eine elektrische Kontaktierung als auch eine Wuchtung durch Materialanhäufungen an und/oder auf dem Kurzschlussring (6) erfolgt.

4. Verfahren zur Herstellung eines Käfigläufers (3) nach einem der vorhergehenden Ansprüche, **dadurch gekennzeichnet, dass** sich die Ausnehmungen (9) in den Kurzschlussringen (6) in axialer Richtung ausgehend von den Stirnseiten (17) des magnetisch leitfähigen Grundkörpers (4) erweitern.

5. Käfigläufer (3) hergestellt durch ein Verfahren nach einem der vorhergehenden Ansprüche.

6. Asynchronmaschine (1) mit einem Käfigläufer (3) nach Anspruch 5.

## Claims

1. Method for producing a squirrel-cage rotor (3) of an asynchronous machine (1) by the following steps:
- Provision of a main body (4), which is magnetically conductive at least in parts and has grooves extending substantially axially,
- Insertion of electrical conductors (5) into the grooves in such a way that said conductors (5) protrude from the axial end faces of the magnetically conductive main body,
- Positioning of electrically conductive end rings (6), which have a plurality of openings (9) for receiving the respective conductors (5),
- Establishing electrical contact between the conductors (5) and end rings (6) by means of an additive manufacturing process.
- wherein one or more end rings (6) are provided at each end face (17) of the magnetically conductive main body (4),
- wherein each of the end rings (6) is produced from a number of ring disks (12, 13) arranged axially directly behind one another,
**characterised in that**
- the ring disk (12) lying axially closest to the magnetic main body has a narrowest through-hole for the conductors (5),
- the at least one ring disk (13) adjoining in the axial direction has additional cutouts (10), and
- the additive manufacturing process is a cold-spray method, in which conductive material is inserted substantially axially into the cutouts, whereby contact is established between the conductors (5) and the end ring (6).

2. Method for producing a squirrel-cage rotor (3) according to claim 1, **characterised in that** the conductors (5) protruding axially from the end faces (17) of the magnetically conductive main body (4) have an end stop shoulder for positioning the end rings (6), so that a squirrel-cage rotor (3) with end rings (6) spaced away from the magnetically conductive main body (4) is produced.

3. Method for producing a squirrel-cage rotor (3) according to one of the preceding claims, **characterised in that** an electrical contact and also a balancing is established by accumulations of material at and/or on the end ring (6) through the AM method.

4. Method for producing a squirrel-cage rotor (3) according to one of the preceding claims, **characterised in that** the openings (9) in the end rings (6) open out in the axial direction starting from the end faces (17) of the magnetically conductive main body (4).

5. Squirrel-cage rotor (3) produced by a method according to one of the preceding claims.

6. Asynchronous machine (1) with a squirrel-cage rotor (3) according to claim 5.

## Revendications

1. Procédé de fabrication d'un rotor (3) à cage d'écureuil d'une machine (1) asynchrone par les stades suivants :
- on se procure un corps (4) de base conducteur magnétiquement au moins par endroits ayant des encoches s'étendant sensiblement axialement,
- on insère des conducteurs (5) électriques dans les encoches, de manière à ce que ces conducteurs (5) sortent des côtés frontaux axiaux du corps de base conducteur magnétiquement,
- on met en position des anneaux (6) de court-circuit conducteurs de l'électricité, qui ont plusieurs évidements (9) de réception des conducteurs (5) respectifs,
- on met en contact électrique les conducteurs (5) avec les anneaux (6) de court-circuit par un procédé de fabrication additive,
- dans lequel il prévu, sur chaque côté (17) frontal du corps (4) de base conducteur magnétiquement, un ou plusieurs anneaux (6) de court-circuit,
- dans lequel chacun des anneaux (6) de court-circuit est fabriqué à partir de plusieurs disques (12, 13) annulaires disposés axialement directement les uns derrière les autres, **caractérisé en ce que**
- le disque (12) annulaire se trouvant le plus près axialement du corps de base magnétique a une traversée très étroite pour les conducteurs (5),
- au moins un disque (13) annulaire se raccordant dans la direction axiale a des évidements (10) supplémentaires, et
- le procédé de fabrication additive est un procédé cold-spray, dans lequel du matériau conducteur est introduit sensiblement axialement dans les évidements, grâce à quoi les conducteurs (5) sont mis en contact avec l'anneau (6) de court-circuit.

2. Procédé de fabrication d'un rotor (3) à cage d'écureuil suivant la revendication 1, **caractérisé en ce que** les conducteurs (5) sortant axialement des côtés (17) frontaux du corps (4) de base conducteur magnétiquement ont un épaulement de butée pour la mise en position des anneaux (6) de court-circuit, de manière à donner un rotor (3) à cage d'écureuil ayant des anneaux (6) de court-circuit à distance du corps (4) de base conducteur magnétiquement.

3. Procédé de fabrication d'un rotor (3) à cage d'écureuil suivant l'une des revendications précédentes, **caractérisé en ce que**, par le procédé AM, il se produit une mise en contact électrique ainsi qu'également un alourdissement par des accumulations de matériaux à et/ou sur l'anneau (6) de court-circuit.

4. Procédé de fabrication d'un rotor (3) à cage d'écureuil suivant l'une des revendications précédentes, **caractérisé en ce que** les évidements (9), dans les anneaux (6) de court-circuit, s'élargissent dans la direction axiale à partir des côtés (17) frontaux du corps (4) de base conducteur magnétiquement.

5. Rotor (3) à cage d'écureuil fabriqué par un procédé suivant l'une des revendications précédentes.

6. Machine (1) asynchrone ayant un rotor (3) à cage d'écureuil suivant la revendication 5.
